# EUROPÄISCHE PATENTSCHRIFT

(11) **EP 3 535 804 B1**
(45) Veröffentlichungstag und Bekanntmachung des Hinweises auf die Patenterteilung: **29.04.2020**
(21) Anmeldenummer: 17804455.8
(22) Anmeldetag: 01.11.2017
(51) Int. Cl.: H01M 10/6555, H01M 10/613, H01M 10/643, H01M 2/10, H01M 2/20, H01M 10/04

(54) **PLATINE ZUR VERBINDUNG VON BATTERIEZELLEN**
CIRCUIT BOARD FOR CONNECTING BATTERY CELLS
PLATINE DE LIAISON D'ÉLÉMENTS DE BATTERIE

(30) Priorität: 02.11.2016 DE 102016120834
(43) Veröffentlichungstag der Anmeldung: 11.09.2019
(73) Patentinhaber: E-Seven Systems Technology Management Ltd, Valletta, VLT 1455 (MT)
(72) Erfinder: KRÄMER, Thomas, St. Julian`s, STJ 3140 (MT)
(74) Vertreter: Cohausz & Florack
(86) Internationale Anmeldenummer: PCT/EP2017/077981
(87) Internationale Veröffentlichungsnummer: WO 2018/083132

(56) Entgegenhaltungen:
- WO-A1-2015/036322
- WO-A1-2015/164593
- CN-A- 105 552 289
- US-A1- 2013 136 955

## Beschreibung

Die vorliegende Erfindung betrifft eine Platine zur Verbindung von Batteriezellen, die teilweise aus einem nicht elektrisch leitfähigen Material ausgebildet ist, wobei die Platine auf einer ersten Seite der Platine und auf einer zweiten Seite jeweils elektrisch und thermisch leitfähige Kontaktierungsabschnitte aufweist, und wobei jeder Kontaktierungsabschnitt mit jedem anderen Kontaktierungsabschnitt elektrisch und thermisch leitfähig verbunden ist.

Der Stand der Technik WO 2015/164593 A1 offenbart wärmeableitende Leiterplatinen mit metallischem Kern.

Die US 2013/136955 A1 offenbart eine gemeinsame Elektrode zur Verbindung einzelner Batteriezellen auf deren erster bzw. zweiter Seite, sodass die Batteriezellen über elektrische Sicherungen verbunden sind.

Aus dem Stand der Technik ist es bekannt, dass innerhalb einer Batterie Batteriezellen miteinander über eine Platine miteinander elektrisch und thermisch leitfähig verbunden werden können. Dies erlaubt es, einen elektrischen Strom und einen Wärmestrom möglichst gleichmäßig innerhalb einer Batterie über eine solche Platine zu verteilen. Hierdurch wird es insbesondere verhindert, dass sich in der Batterie lokale thermische Hot-Spots bilden, was besonders nachteilig für den Betrieb der Batterie ist. Es ist erwünscht, dass die Betriebstemperatur der Batterie möglichst niedrig gehalten wird. Der vorliegenden Erfindung liegt deshalb die Aufgabe zugrunde, eine Platine bereitzustellen, die dazu geeignet ist, einen Wärmestrom aus einer Batterie abzuführen.

Die Aufgabe wird durch eine Platine entsprechend dem Anspruch 1 gelöst. Die Platine ist erfindungsgemäß so ausgeführt, dass auf dem nicht elektrisch leitfähigen Material der Platine ein die zweite Seite bildender flächiger Belag aus einem elektrisch und thermisch leitfähigen Material angeordnet ist, wobei mindestens ein Abschnitt des Belags einen Kontaktierungsabschnitt der zweiten Seite bildet und wobei auf einer von dem Belag abgewandten ersten Seite des nicht elektrisch leitfähigen Materials mindestens ein Kontaktierungsabschnitt angeordnet ist, und wobei
mehrere elektrisch und thermisch leitfähige Durchführungselemente sich durch das nicht elektrisch leitfähige Material erstrecken, sodass eine elektrische und eine thermische Verbindung der Kontaktierungsabschnitte auf der ersten Seite mit den Kontaktierungsabschnitten auf der zweiten Seite durch das Durchführungselement hergestellt wird und ein Wärmestrom durch den Belag aufgenommen und aus der Platine abgeführt werden kann.

Der Belag ist aus einem elektrisch und thermisch leitfähigen Material ausgeführt. Elektrisch leitfähige Materialien bieten oftmals den Vorteil, dass sie auch thermisch sehr gut leitfähig sind. Der Belag ist in dem nicht elektrisch leitfähigen Material der Platine angeordnet. Dabei ist der Belag vorzugsweise flächig ausgeführt. So kann es sich bei dem Belag um eine Platte aus einem elektrisch und thermisch leitfähigen Material handeln, auf dem das nicht elektrisch leitfähige Material angeordnet ist. Das nicht elektrisch leitfähige Material ist dabei vorzugsweise flächig auf den Belag aufgebracht. Der Belag muss aber nicht notwendigerweise flächig ausgestaltet sein. So ist es erfindungsgemäß auch möglich, dass der Belag aus einzelnen Leiterelementen oder einem Gewebe von Leiterelementen ausgeführt ist. Abweichende geometrische Formen des Belags sind erfindungsgemäß auch möglich.

Mehrere elektrisch und thermisch leitfähige Durchführungselemente sind durch das nicht elektrisch leitfähige Material hindurchgeführt. Sie verbinden die Kontaktierungsabschnitte auf der ersten Seite der Platine elektrisch leitfähig mit den Kontaktierungsabschnitten auf der zweiten Seite der Platine. Dabei kann es die beiden Kontaktierungsabschnitte entweder unmittelbar oder aber indirekt, so zum Beispiel über weitere elektrisch und thermisch leitfähige Elemente, miteinander verbinden.

Erfindungsgemäß kann das nicht elektrisch leitfähige Material aus einem gängigen Substratmaterial ausgebildet sein, das bei Platinen beziehungsweise Leiterplatten Verwendung findet. Die elektrisch und thermisch leitfähigen Kontaktierungsabschnitte sowie die elektrisch und thermisch leitfähigen Durchführungselemente sind vorzugsweise aus einem Metall ausgeführt. Ganz besonders bevorzugt handelt es sich dabei um Kupfer. Dies ist vorteilhaft, denn Kupfer weist eine besonders gute elektrische und thermische Leitfähigkeit auf. Die Platine kann unter Anwendung dem Fachmann bekannter Fertigungsverfahren für Leiterplatten kostengünstig hergestellt werden.

Vorzugsweise ist der Belag vollflächig ausgeführt. Dies ist so zu verstehen, dass der Belag keine Aussparungen aufweist. Er kann gemäß einer möglichen Ausführungsform eine Dicke von 0,1 bis 0,5 mm aufweisen.

Bevorzugt ist der Belag aus einer Kante der Platine herausgeführt oder liegt an einer Kante der Platine frei. Somit ist der Belag dazu geeignet, thermische Energie seitlich aus der Platine herauszuführen. Der Belag kann dabei an mehreren Kanten der Platine aus dieser herausgeführt sein oder freiliegen.

Gemäß einer besonderen Ausführungsform der Erfindung ist der Belag mit einem thermisch leitfähigen Wärmeabfuhrelement thermisch leitfähig verbunden oder der Belag bildet ein thermisch leitfähiges Wärmeabfuhrelement, wobei das Wärmeabfuhrelement einen ersten flächigen Abschnitt aufweist, der in einer Ebene der Platine liegt, und wobei das thermisch leitfähige Wärmeabfuhrelement einen zweiten flächigen Abschnitt aufweist, der in einer weiteren Ebene liegt, die in einem rechten Winkel zu der Ebene der Platine ausgerichtet ist. Ein solches Wärmeabfuhrelement ist besonders gut dazu geeignet, um einen Wärmestrom aus einer Batterie abzuführen. Der erste flächige Abschnitt ist dabei dazu geeignet, einen Wärmestrom aus einer Zellanordnung einer Batterie, in der die Platine angeordnet ist, herauszuführen. Das zweite Wärmeabfuhrelement ist dazu geeignet, diesen Wärmestrom an eine Wärmesenke abzugeben. Dazu kann das zweite Wärmeabfuhrelement flächig an einer Wärmesenke anliegen. Bei dieser Wärmesenke kann es sich um ein Gehäuse handeln, dass um eine Zellanordnung, in der die Platine angeordnet ist, herumgeführt ist. Es kann sich aber bei der Wärmesenke um ein sonstiges Kühlelement handeln. Da der zweite Abschnitt des Wärmeabfuhrelements flächig ausgeführt ist kann ein besonders großer Wärmestrom über diesen an eine Wärmesenke abgeführt werden. Erfindungsgemäß kann der Belag der Platine aus einem Metall ausgeführt sein. Die meisten Metalle weisen nicht nur eine sehr gute elektrische, sondern auch eine sehr gute thermische Leitfähigkeit auf. Erfindungsgemäß kann der Belag dabei aus Kupfer ausgeführt sein. Der Belag kann alternativ jedoch auch aus einem sonstigen Metall oder aus einer Metalllegierung ausgeführt sein.

Besonders bevorzugt ist der Belag aus Aluminium ausgeführt. Aluminium weist eine sehr gute thermische Leitfähigkeit auf, weist aber auch eine niedrige Dichte auf. Hierdurch kann die Platine besonders leicht ausgeführt werden, was einen deutliche Auswirkung auf ein Gewicht einer Batterie haben kann, in der eine Vielzahl erfindungsgemäßer Platinen vorgesehen sind.

Die Platine ist erfindungsgemäß so ausgestaltet, dass auf der ersten Seite der Platine ein elektrisch und thermisch leitfähiger Verbindungsabschnitt angeordnet ist, der die Kontaktierungsabschnitte auf der ersten Seite der Platine elektrisch und thermisch leitfähig miteinander verbindet, und wobei den Kontaktierungsabschnitten auf der ersten Seite jeweils eine elektrische Sicherung zugeordnet ist und der Verbindungsabschnitt auf der ersten Seite der Platine mit jedem Kontaktierungsabschnitt auf der ersten Seite der Platine über die diesem Kontaktierungsabschnitt zugeordnete elektrische Sicherung verbunden ist, sodass die Kontaktierungsabschnitte auf der ersten Seite der Platine gegenüber dem Verbindungsabschnitt elektrisch gesichert sind. Dies ist insbesondere dann vorteilhaft, wenn ein Innenwiderstand einer Batteriezelle, mit der die Platine verbunden ist, aufgrund eines Fehlers in der Batteriezelle zusammenbricht, sodass ein zu hoher Strom durch diese Batteriezelle fließt. In diesem Fall wird eine elektrische Sicherung ausgelöst, die einem Kontaktierungsabschnitt der Platine zugeordnet ist, der mit der fehlerhaften Batteriezelle elektrisch und thermisch leitfähig verbunden ist. Ein überhöhter Strom kann somit aus der defekten Batteriezelle nicht in den Verbindungsabschnitt fließen. Im Ergebnis sind weitere Batteriezellen, die an weiteren Kontaktierungsabschnitten der Platine elektrisch und thermisch leitfähig anliegen, gegenüber der fehlerhaften Batteriezelle elektrisch gesichert.

Ganz besonders bevorzugt sind die Durchführungselemente so angeordnet, dass sie den Verbindungsabschnitt auf der ersten Seite der Platine mit den Kontaktierungsabschnitten auf der zweiten Seite der Platine elektrisch und thermisch leitfähig verbinden, sodass jeder Kontaktierungsabschnitt auf der ersten Seite gegenüber jedem anderen Kontaktierungsabschnitt auf der ersten Seite der Platine und gegenüber jedem Kontaktierungsabschnitt auf der zweiten Seite der Platine durch mindestens eine elektrische Sicherung gesichert ist. Hierdurch wird eine elektrische Sicherung aller Kontaktierungsabschnitte gegenüber einander gewährleistet. Mit einer Anordnung gemäß dieser Ausführungsordnung kann es vermieden werden, dass eine unnötig große Anzahl an Sicherungen vorgesehen werden muss. So ist es bei der erfindungsgemäßen Anordnung insbesondere nicht notwendig, dass leitfähige Durchführungselemente, die Kontaktierungsabschnitte der ersten Seite und der zweiten Seite der Platine miteinander verbinden, als Sicherungen dimensioniert werden müssen. Es sind jedoch auch alternative Ausführungsformen der Erfindung möglich, gemäß denen Durchführungselemente als Sicherungen dimensioniert sind. Erfindungsgemäß ist es insbesondere möglich, dass Durchführungselemente nicht in einem Verbindungsabschnitt angeordnet sind, sondern jeweils unmittelbar Kontaktierungsabschnitte auf der ersten Seite und auf der zweiten Seite der Platine miteinander verbinden.

Es ist vorteilhaft, wenn der Verbindungsabschnitt als eine flächige, elektrisch und thermisch leitfähige Schicht auf der ersten Seite der Platine ausgebildet ist. Wenn der Verbindungsabschnitt als eine flächige Schicht ausgebildet ist, dann weist er eine sehr große elektrische und thermische Leitfähigkeit auf und ist somit besonders gut dafür geeignet, einen elektrischen und einen thermischen Strom zwischen den Kontaktierungsabschnitten auf der ersten Seite der Platine zu verteilen. Alternativ kann der Verbindungsabschnitt als ein Verbund von Leiterbahnen ausgebildet sein, die miteinander elektrisch und thermisch leitfähig verbunden sind. Ein Verbund von Leiterbahnen bietet den Vorteil, dass dabei weniger elektrisch und thermisch leitfähiges Material für den Verbindungsabschnitt aufgewandt werden muss. Es verbleibt dabei auf der Platine zusätzlicher Platz für sonstige Komponenten, die auf dem nichtleitenden Material angeordnet werden können.

Gemäß einer besonderen Ausführungsform der Erfindung ist der Verbindungsabschnitt auf der ersten Seite der Platine mit dem Belag auf der zweiten Seite der Platine durch das elektrisch nicht leitfähige Material hindurch verbunden. Somit ist es nicht notwendig, dass der Verbindungsabschnitt auf der ersten Seite der Platine unmittelbar mit einem Kontaktierungsabschnitt auf der zweiten Seite der Platine elektrisch und thermisch leitfähig über ein Kontaktierungselement verbunden ist. Stattdessen kann eine elektrisch und thermisch leitfähige Verbindung zwischen dem Verbindungsabschnitt auf der ersten Seite und dem Belag auf der zweiten Seite bestehen. Dabei kann ein elektrischer und ein thermischer Strom über den Belag zu den Kontaktierungsabschnitten auf der zweiten Seite der Platine geführt werden.

Gemäß einer weiteren Ausführungsform der Erfindung sind um jeden Kontaktierungsabschnitt in dem Verbindungsabschnitt auf der ersten Seite der Platine mehrere Durchführungselemente gleichmäßig von dem Kontaktierungsabschnitt beabstandet angeordnet. Es hat sich herausgestellt, dass durch die Bereitstellung mehrerer Durchführungselemente ein elektrischer und thermischer Strom ganz besonders gut von der ersten Seite der Platine zu der zweiten Seite der Platine geleitet werden kann. Dabei hat es sich als vorteilhaft herausgestellt, wenn die Durchführungselemente in der Nähe der Kontaktierungsabschnitte in dem Verbindungsabschnitt auf der ersten Seite der Platine angeordnet sind. Ganz besonders gut geeignet ist hierbei eine kreisförmige Anordnung der Durchführungselemente um die Kontaktierungsabschnitte herum. Eine Anzahl von sechs bis zwölf Durchführungselementen hat sich als besonders vorteilhaft herausgestellt.

Erfindungsgemäß können die Durchführungselemente auf einem Innenrand einer Durchführungsaussparung angeordnet sein, die das nicht leitfähige Material durchläuft. Die Durchführungsaussparung kann kreisförmig ausgeführt sein oder eine sonstige Form aufweisen. Das Durchführungselement ist dabei vorzugsweise eine Metallschicht, die erfindungsgemäß auf den Innenrand der Durchführungsaussparung aufgedampft oder aufgedruckt sein kann. Die Durchführungsaussparung kann in das nicht leitfähige Material gebohrt oder gestanzt sein. Das Durchführungselement kann jedoch auch abweichend ausgeführt sein und muss insbesondere nicht notwendigerweise entlang einer Durchführungsaussparung durch das nicht leitfähige Material hindurchgeführt sein. So kann das Durchführungselement gemäß einer möglichen Ausführungsform der Erfindung als ein Nietelement in das nicht leitfähige Material eingebracht sein.

Erfindungsgemäß können die Kontaktierungsabschnitte auf der ersten Seite und/oder auf der zweiten Seite der Platine gegenüber einer Ebene, die durch eine Oberfläche der ersten Seite beziehungsweise der zweiten Seite der Platine definiert wird, erhaben ausgebildet sein. Ein erhabenes Element des Kontaktierungsabschnitts weist bevorzugt eine flache Oberfläche oder eine Oberfläche mit einer Reliefform auf, die einer Form eines Endanschlusses einer Batteriezelle angepasst ist. Hierdurch wird eine Kontaktierung der Kontaktierungsabschnitte mit Batteriezellen verbessert. Bevorzugt sind die Kontaktierungsabschnitte solchermaßen ausgeführt, dass sie zwischen 0,1 mm und 0,3 mm aus der Ebene herausragen, die durch die Oberfläche der ersten Seite beziehungsweise die Oberfläche der zweiten Seite der Platine definiert wird.

Es ist vorteilhaft, wenn die Kontaktierungsabschnitte erhabene Kontaktierungspunkte aufweisen. Die Kontaktierungspunkte können dazu dienen, eine wohldefinierte elektrisch und thermisch leitfähige Verbindung zwischen den Kontaktierungsabschnitten und an diesen angrenzenden Batteriezellen herzustellen.

Vorzugsweise ist die Platine flexibel ausgebildet. Hierzu kann die Platine aus flexiblen und/oder elastischen Materialien ausgebildet sein. Beispielsweise kann das nicht elektrisch leitfähige Material aus einem elastischen Polymer verwendet werden. Das nicht elektrisch leitfähige Material kann aus einem Polyimid gebildet sein, bei dem es sich bevorzugt um Kapton handelt. Kapton ist chemisch sehr beständig und weist eine sehr hohe Durchschlagfeldstärke auf. Das auf der Platine aufgebrachte elektrisch und thermisch leitfähige Material, aus dem die Kontaktierungsabschnitte, der Verbindungsabschnitt auf der ersten Seite der Platine, der Belag und das mindestens eine Durchführungselement bestehen, weist eine ausreichende Flexibilität auf, wenn es sich um ein Metall handelt. Jedoch sollte die Menge des aufgebrachten Metalls so dimensioniert sein, dass es beim Verbiegen der Platine nicht beschädigt wird, wodurch Abschnitte der Platine ihre elektrische und thermische Leitfähigkeit einbüßen oder verlieren könnten.

Besonders bevorzugt ist in der Platine mindestens eine Kühlleitung vorgesehen, um die Platine zu kühlen. Dabei kann die Kühlleitung die Platine in einer Ebene, die durch die Platine gebildet wird, durchlaufen. Es können erfindungsgemäß mehrere Kühlleitungen in der Platine vorgesehen sein. Die Kühlleitung kann erfindungsgemäß den Belag der Platine durchlaufen.

Bevorzugt ist unter jedem Kontaktierungsabschnitt ein elastisches Material angeordnet, das unter Einwirkung einer Anpresskraft auf den Kontaktierungsabschnitt elastisch verformbar ist. Das elastische Material kann erfindungsgemäß in dem nicht leitfähigen Material unter dem Kontaktierungsabschnitt angeordnet sein. Wird eine Anpresskraft auf den Kontaktierungsabschnitt ausgeübt, so werden sowohl der Kontaktierungsabschnitt als auch das elastische Material deformiert. Somit ist es möglich, eine besonders gute elektrisch und thermisch leitfähige Verbindung zwischen einem Kontaktierungsabschnitt und einer Batteriezelle herzustellen. Aufgrund der lokalen Deformierung der Platine kann eine unerwünschte Verformung der Platine in weiteren Abschnitten der Platine oder gar eine Beschädigung der Platine vermieden werden, wenn Batteriezellen an die Kontaktierungsabschnitte herangedrückt werden.

Vorzugsweise ist an dem Verbund von Leiterbahnen beziehungsweise an der flächigen, elektrisch und thermisch leitfähigen Schicht auf der ersten Seite der Platine und/oder an dem Belag auf der zweiten Seite der Platine mindestens ein zusätzlicher Kontakt vorgesehen. Hierbei handelt es sich um einen Kontakt, der nicht zur Kontaktierung durch eine Batteriezelle vorgesehen ist. An einen solchen Kontakt kann ein Batteriemanagementsystem angeschlossen werden, sodass beispielsweise eine an der Platine anliegende Spannung gemessen werden kann. Vorzugsweise ist an der Platine mindestens ein weiterer Kontakt vorgesehen. Der weitere Kontakt kann beispielsweise mit einer Messvorrichtung verbunden sein, die auf der Platine aufgebracht oder in der Platine vorgesehen ist. Hierbei kann es sich um einen Temperaturfühler handeln. Erfindungsgemäß kann der Kontakt auch zum Anschluss eines Bussystems dienen, über das auf der Platine vorgesehene Messvorrichtungen ausgelesen und/oder angesteuert werden können.

Die vorliegende Offenbarung betrifft weiter eine Batterie mit einer Zellanordnung, wobei die Zellanordnung mehrere Batteriezellen aufweist, wobei die Zellanordnung mindestens zwei Batterieabschnitte aufweist und jeder Batterieabschnitt aus mehreren Batteriezellen besteht, wobei die Batteriezellen der Batterieabschnitte so ausgerichtet sind, dass Endanschlüsse der Batteriezellen des jeweiligen Batterieabschnitts in einer gemeinsamen ersten Kontaktierungsebene liegen und dass Endanschlüsse der Batteriezellen des jeweiligen Batterieabschnitts in einer gemeinsamen zweiten Kontaktierungsebene liegen, wobei die Batterieabschnitte benachbart zueinander angeordnet sind, wobei jeweils eine erste Kontaktierungsebene eines Batterieabschnitts einer zweiten Kontaktierungsebene eines benachbart angeordneten Batterieabschnitts zugewandt ist und wobei die Kontaktierungsebenen parallel zueinander ausgerichtet sind, wobei zwischen mindestens zwei aufeinanderfolgenden Batterieabschnitten eine zumindest teilweise elektrisch und thermisch leitfähige Verbindungsplatte mit einer ersten Seite und einer zweiten Seite angeordnet ist, die auf der ersten Seite und auf der zweiten Seite jeweils mindestens einen elektrisch und thermisch leitfähigen Kontaktierungsabschnitt aufweist, wobei die der ersten Seite dieser Verbindungsplatte zugewandten Endanschlüsse elektrisch und thermisch leitfähig mit dem mindestens einen Kontaktierungsabschnitt dieser ersten Seite verbunden sind und wobei die der zweiten Seite dieser Verbindungsplatte zugewandten Endanschlüsse elektrisch und thermisch leitfähig mit dem mindestens einen Kontaktierungsabschnitt dieser zweiten Seite verbunden sind, und wobei Kontaktierungsabschnitte der Verbindungsplatte miteinander elektrisch und thermisch leitfähig über die Verbindungsplatte verbunden sind.

Die Verbindungsplatte ist als eine Platine ausgebildet, die wie vorangehend beschrieben ausgebildet ist. Dabei ist der Belag thermisch leitfähig mit einer Wärmesenke verbindbar, sodass ein Wärmestrom durch den Belag aufgenommen und aus der Zellanordnung auf die Wärmesenke abgeführt werden kann.

In der Batterie befinden sich jeweils mehrere Batteriezellen in einem Batterieabschnitt. Vorzugsweise handelt es sich bei den Batteriezellen um Rundzellen. Bei diesen hat es sich herausgestellt, dass sie besonders widerstandsfähig gegenüber mechanischen Belastungen sind.

Die Zellanordnung kann von einem thermisch leitfähigen Gehäuse umschlossen sein. Da das Gehäuse thermisch leitfähig ist, eignet es sich dazu, als eine Wärmesenke Wärme aus der Zellanordnung aufzunehmen und optional an weitere Wärmesenken zu übertragen, mit denen es thermisch leitfähig verbunden ist. Das vorhergehend beschriebene Wärmeabfuhrelement kann mit dem Gehäuse thermisch leitfähig verbunden sein. Das Gehäuse ist vorzugsweise aus einem Metall gefertigt, besonders bevorzugt aus Eisen, Aluminium oder einer Metalllegierung. Ein solches Gehäuse ist dazu geeignet, die Zellanordnung vor äußeren Einwirkungen zu schützen. Das Gehäuse weist vorzugsweise zwei Öffnungen auf, auf welche die Druckplatten aufgesetzt werden. Das Gehäuse kann weitere längliche Aussparungen als Belüftungsschlitze aufweisen.

Die Batteriezellen können so angeordnet sein, dass erste Endanschlüsse einer Kontaktierungsebene eines ersten Batterieabschnitts unmittelbar gegenüberliegend zu zweiten Endanschlüssen einer Kontaktierungsebene eines zweiten Batterieabschnitts angeordnet sind, sodass sämtliche Batteriezellen eines Batterieabschnitts fluchtend mit den Batteriezellen eines benachbarten Batterieabschnitts angeordnet sind. Somit sind Gruppen von Batteriezellen mehrerer Batterieabschnitte reihig zueinander angeordnet.

Vorzugsweise liegen positive Endanschlüsse eines Batterieabschnitts unmittelbar an negativen Endanschlüssen eines benachbarten Batterieabschnitts elektrisch und thermisch leitfähig an. Demgemäß sind zwei oder mehr Batteriezellen in Reihe geschaltet, ohne dass dabei direkt benachbarte Batteriezellen durch eine Platine voneinander separiert sind. Ein solcher Aufbau kann vorgesehen werden, wenn eine ausreichende Verteilung eines elektrischen Stroms und eines Wärmestroms innerhalb einer Batterie auch mit einer geringen Zahl von Platinen innerhalb der Zellanordnung möglich ist. Ob dies möglich ist, wird maßgeblich durch kapazitive und sonstige Eigenschaften der Batteriezellen bestimmt.

Vorzugsweise weist jede Batteriezelle einen positiven und einen negativen Endanschluss auf und die Batteriezellen der Batterieabschnitte sind so ausgerichtet, dass sämtliche positiven Endanschlüsse der Batteriezellen des jeweiligen Batterieabschnitts in der ersten Kontaktierungsebene liegen und dass sämtliche negativen Endanschlüsse der Batteriezellen des jeweiligen Batterieabschnitts in der zweiten Kontaktierungsebene liegen, wobei die mit dem mindestens einen Kontaktierungsabschnitt der ersten Seite verbundenen Endanschlüsse untereinander über die Verbindungsplatte elektrisch und thermisch leitfähig miteinander verbunden sind, wobei die mit den Kontaktierungsabschnitten der zweiten Seite verbundenen Endanschlüsse untereinander über die Verbindungsplatte elektrisch und thermisch leitfähig miteinander verbunden sind, und wobei die mit dem mindestens einen Kontaktierungsabschnitt der ersten Seite verbundenen Endanschlüsse elektrisch und thermisch leitfähig mit den mit dem mindestens einen Kontaktierungsabschnitt der zweiten Seite verbundenen Endanschlüssen über die Verbindungsplatte verbunden sind, sodass die Batteriezellen in einer elektrischen und thermischen Reihen- und Parallelschaltung elektrisch leitfähig miteinander verbunden sind. Der Vorteil einer solchen Anordnung besteht darin, dass ein elektrischer Strom und ein thermischer Strom über die gesamte Zellanordnung verteilt werden können. Fällt eine Batteriezelle in einem Batterieabschnitt aus, so beeinträchtigt dies die Leistung der Batterie nur geringfügig, da in dem Batterieabschnitt noch weitere, funktionstüchtige Batteriezellen vorliegen. Unter einem positiven Endanschluss beziehungsweise einem negativen Endanschluss ist ein Pluspol beziehungsweise ein Minuspol einer Batteriezelle zu verstehen.

Es ist bevorzugt, wenn durch die in den beiden äußeren Kontaktierungsebenen der Batterie liegenden Endanschlüsse ein Batterieanfangsabschnitt und ein Batterieendabschnitt definiert werden, wobei an dem Batterieanfangsabschnitt und dem Batterieendabschnitt jeweils eine Druckplatte angeordnet ist, wobei die Druckplatten über Zugelemente miteinander verbunden sind und dadurch die an der mindestens einen Platine anliegenden Batteriezellen an die mindestens eine Platine andrücken.

Die Komponenten innerhalb der Zellanordnung werden hierdurch miteinander verpresst. Dabei üben die Druckplatten jeweils eine Anpresskraft auf die Batteriezellen aus. Die Druckplatte kann die Anpresskraft an dem Batterieanfangsabschnitt beziehungsweise an dem Batterieendabschnitt direkt auf die Batteriezellen ausüben. So kann die Druckplatte unmittelbar an positiven oder an negativen Endanschlüssen der Batteriezellen anliegen. Die Druckplatte kann die Anpresskraft an dem Batterieanfangsabschnitt beziehungsweise an dem Batterieendabschnitt alternativ jedoch auch indirekt auf die Batteriezellen ausüben. So kann zwischen der Druckplatte und den Batteriezellen eine zusätzliche Schicht vorgesehen sein.

Diese zusätzliche Schicht kann elektrisch nichtleitend und/oder elastisch ausgeführt sein.

Die Druckplatten können flächig ausgebildet sein, es sind jedoch auch abweichende Bauformen möglich. Die Zugelemente sind jeweils mit den Druckplatten verbunden. Dabei sind die Zugelemente solchermaßen zwischen den Druckplatten verspannt, dass sie eine Zugkraft auf die Druckplatten ausüben. Bedingt durch die Zugkraft können die Druckplatten wiederum die bereits beschriebene Anpresskraft auf die Zellanordnung ausüben. Die Anpresskraft wird über alle Batterieabschnitte der Zellanordnung hinweg innerhalb der Batterie übertragen. Dadurch werden die Batteriezellen besonders gut der mindestens einen Platine innerhalb der Zellanordnung kontaktiert, denn durch eine hohe Anpresskraft kann eine Fläche zwischen zwei einander elektrisch und/oder thermisch kontaktierenden Elementen vergrößert werden.

Die Zugelemente können als Stangen, als Rohre oder als sonstige länglich ausgebildete Elemente ausgebildet sein. Vorzugsweise sind die Stangen aus einem Metall, ganz besonders aus Stahl ausgeführt. Die Stangen können alternativ jedoch auch aus einem besonders stabilen Kunststoff oder aus einem Verbundmaterial ausgeführt sein.

Es ist vorteilhaft, wenn die Druckplatten als Metallplatten ausgebildet sind. Metallplatten sind ausreichend stabil, sodass durch sie eine Zugkraft von den Zugelementen auf die Zellanordnung übertragen werden kann. Die Metallplatten können dabei in Abhängigkeit von einer vorgesehenen Zugkraft unterschiedlich dick ausgeführt sein. Wird eine hohe Zugkraft vorgesehen, so muss die Metallplatte besonders dick ausgeführt sein. Vorzugsweise ist die Metallplatte 3 bis 20 mm dick ausgeführt, ganz besonders bevorzugt ist sie 5 mm dick ausgeführt. Die Metallplatten können aus Kupfer, aus Aluminium oder aus einem sonstigen sehr gut wärmeleitfähigen Material ausgebildet sein. Alternativ ist es möglich, die Druckplatten nicht aus Metall auszuführen. So können die Druckplatten aus einem harten Kunststoff ausgeführt sein.

Bevorzugt sind die Zugelemente durch Zugelementaussparungen in den Druckplatten hindurchgeführt, wobei die Zugelemente in den Zugelementaussparungen verschraubt sind und/oder mit Hilfe von Muttern an den Druckplatten verschraubt sind. Eine Schraubverbindung erlaubt es, eine durch die Zugelemente auf die Druckplatten auszuübende Zugkraft genau einzustellen. Es sind jedoch auch sonstige Festlegungsmittel verwendbar, um die Zugelemente an den Zugelementaussparungen so festzulegen, dass die Zugelemente eine Zugkraft auf die Druckplatten ausüben.

Weitere vorteilhafte Ausführungsformen der Erfindung sind in den Zeichnungen dargestellt. Dabei zeigt:
Fig. 1 eine schematische Darstellung einer erfindungsgemäßen Platine in einer Ansicht auf eine erste Seite der Platine,
Fig. 2 eine schematische Darstellung der Platine gemäß Fig. 1 in einer Ansicht auf eine zweite Seite der Platine,
Fig. 3 eine schematische Darstellung der Platine gemäß Fig. 1 und 2 mit einer Durchführungsaussparung in einer Schnittansicht,
Fig. 4 eine schematische Darstellung der Platine gemäß Fig. 1 bis 3 mit einem elastischen Material in einer Schnittansicht,
Fig. 5 eine schematische Darstellung einer Zellanordnung einer Batterie mit einer erfindungsgemäßen Platine,
Fig. 6 eine schematische Darstellung eines Abschnitts der Zellanordnung der Batterie gemäß Fig. 5 in einer Schnittansicht und
Fig. 7 eine schematische Darstellung der Batterie gemäß Fig. 5 und Fig. 6 mit einem Gehäuse.

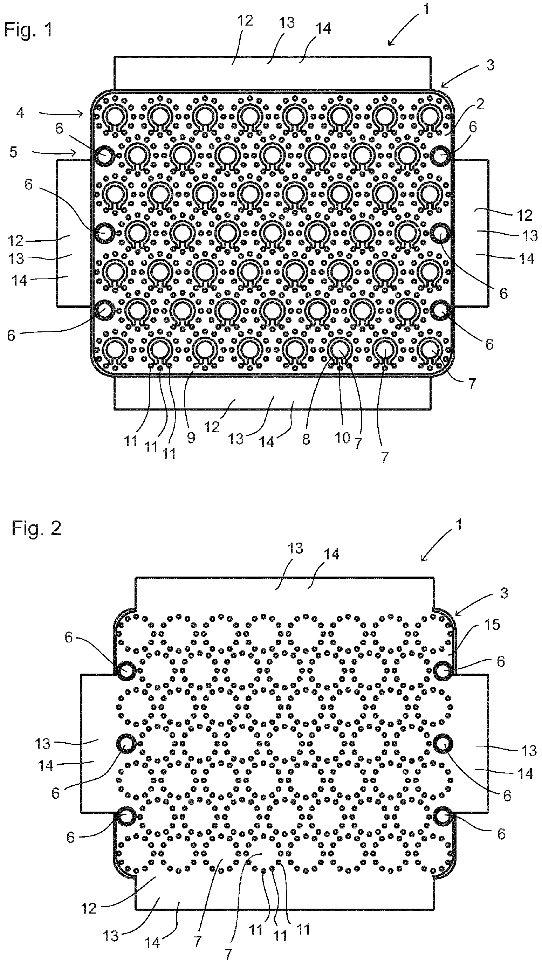

Fig. 1 zeigt eine schematische Darstellung einer erfindungsgemäßen Platine 1 in einer Ansicht auf eine erste Seite 2 der Platine 1. Es handelt sich vorliegend um eine Platine 1 als Teil einer Zellanordnung 3 mit in ersten Zellebenen 4 und in zweiten Zellebenen 5 versetzt angeordneten Batteriezellen (nicht gezeigt). Die Platine 1 ist hierbei für Zellanordnungen 3 mit sieben ersten und zweiten Zellebenen 4 und 5 geeignet, wobei in den ersten und zweiten Zellebenen 4 und 5 jeweils acht beziehungsweise sieben Batteriezellen (nicht gezeigt) angeordnet sind. Die Platine 1 weist Zugelementaussparungen 6 auf, durch die Zugelemente (nicht gezeigt) hindurchgeführt werden können.

Die Platine 1 ist teilweise aus einem elektrisch nicht leitfähigen Material ausgebildet. Auf das nicht elektrisch leitfähige Material ist auf der ersten Seite der Platine 1 Kupfer als ein elektrisch und thermisch leitfähiges Material flächig aufgebracht. Das Kupfermaterial weist dabei mehrere Kontaktierungsabschnitte 7 auf. Diese sind zur Kontaktierung mit den Endanschlüssen von Batteriezellen geeignet. Zu diesem Zweck sind die Kontaktierungsabschnitte 7 erhaben ausgeführt. Die Kontaktierungsabschnitte 7 sind durch Isolierungsabschnitte 8 aus einem nicht elektrisch leitfähigen Material von einem Verbindungsabschnitt 9 getrennt. Der Verbindungsabschnitt 9 ist flächig ausgebildet. Er verbindet die Kontaktierungsabschnitte 7 miteinander elektrisch und thermisch leitfähig. Durch jeden Isolierungsabschnitt 8 ist eine elektrisch und thermisch leitfähige Leiterbahn 10 hindurchgeführt, die als eine Sicherung dimensioniert ist. Hierdurch werden die Kontaktierungsabschnitte 7 auf der ersten Seite 2 der Platine 1 gegenüber einander elektrisch gesichert.

Um jeden Isolierungsabschnitt 8 und damit auch um jeden Kontaktierungsabschnitt 7 sind mehrere Durchführungsaussparungen 11 kreisförmig angeordnet. In jeder Durchführungsaussparung 11 ist ein Durchführungselement (nicht gezeigt) angeordnet. Das Durchführungselement ist aus Kupfer ausgeführt und verbindet den Verbindungsabschnitt 9 der ersten Seite 2 der Platine 1 mit einer zweiten Seite (nicht gezeigt) der Platine 1 elektrisch und thermisch leitfähig. Ein aus einer Batteriezelle in einen Kontaktierungsabschnitt 7 fließender Strom kann somit durch die Leiterbahn 10 und den Verbindungsabschnitt zu der zweiten Seite der Platine 1 geführt werden. Da die Kontaktierungsabschnitte 7 auf der ersten Seite 2 der Platine 1 gegenüber dem Verbindungsabschnitt 9 elektrisch gesichert sind, sind sie auch gegenüber nicht gezeigten Kontaktierungsabschnitten auf der zweiten Seite der Platine 1 elektrisch gesichert.

Auf der nicht gezeigten zweiten Seite der Platine 1 befindet sich ein Belag 12 aus Kupfer, der sich teilweise seitlich in Bereiche außerhalb der Platine 1 erstreckt. In diesen Bereichen außerhalb der Platine 1 bildet der Belag 12 ein Wärmeabfuhrelement 13. Vorliegend sind vier Wärmeabfuhrelemente 13 mit jeweils einem ersten flächigen Abschnitt 14 dargestellt. An jedem Wärmeabfuhrelement 13 befindet sich auch ein zweiter flächiger Abschnitt, der jedoch aus der vorliegenden Perspektive nicht sichtbar ist.

Fig. 2 zeigt eine schematische Darstellung der Platine 1 gemäß Fig. 1 in einer Ansicht auf die zweite Seite 15 der Platine 1. Auf der zweiten Seite 15 der Platine 1 befindet sich der Belag 12, der flächig ausgebildet ist. In dem Belag sind Kontaktierungsabschnitte 7 angeordnet, die zur Kontaktierung mit Endanschlüssen von Batteriezellen geeignet sind. Um jeden Kontaktierungsabschnitt 7 sind mehrere Durchführungsaussparungen 11 kreisförmig angeordnet. Nicht gezeigte Durchführungselemente sind in der Platine 1 wie vorangehend beschrieben in den Durchführungsaussparungen 11 angeordnet.

Vorliegend sind ferner die vier Wärmeabfuhrelemente 13 mit jeweils einem ersten flächigen Abschnitt 14 gezeigt. Auch auf der zweiten Seite der Platine 1 sind die Zugelementaussparungen 6 sichtbar, durch die Zugelemente hindurchgeführt werden können.

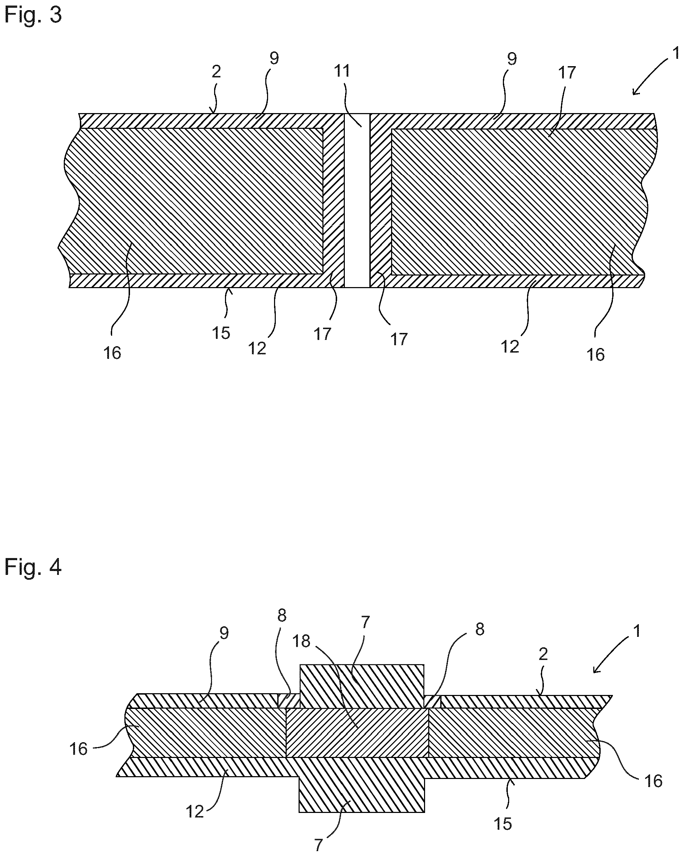

Fig. 3 zeigt eine schematische Darstellung der Platine 1 gemäß Fig. 1 und 2 mit einer Durchführungsaussparung 11 in einer Schnittansicht. Die Platine 1 weist ein elektrisch nicht leitendes Substratmaterial 16 auf. Auf das elektrisch nicht leitende Substratmaterial 16 ist der elektrisch und thermisch leitfähige Belag 12 aufgebracht. Auf der ersten Seite 2 der Platine 1 bildet eine Kupferschicht den Verbindungsabschnitt 9. Eine Durchführungsaussparung 11 ist durch die Platine 1 hindurchgeführt. Sie durchläuft dabei den Verbindungsabschnitt 9, das Substratmaterial und den Belag 12. In der Durchführungsaussparung 11 ist ein Durchführungselement 17 aus Kupfer flächig in einer dünnen Schicht auf dem Substratmaterial 16 angeordnet. Ein elektrischer und ein thermischer Strom kann somit durch das Substratmaterial 16 hindurchgeführt und über den Belag 12 aus der Platine 1 abgeführt werden.

Fig. 4 zeigt eine schematische Darstellung der Platine 1 gemäß Fig. 1 bis 3 mit einem elastischen Material 18 in einer Schnittansicht. Die Platine 1 umfasst das nicht elektrisch leitfähige Substratmaterial 16 und den Belag 12. Auf einer ersten Seite 2 der Platine 1 bildet eine Kupferschicht den Verbindungsabschnitt 9. Auf der zweiten Seite 15 der Platine 1 bildet eine Kupferschicht den Belag 12. Die erste Seite 2 und die zweite Seite 15 der Platine 1 weisen erhaben ausgeführte Kontaktierungsabschnitte 7 auf. Dabei ist um den Kontaktierungsabschnitt 7 auf der ersten Seite 2 der Platine 1 ein nicht elektrisch leitfähiger Isolierungsabschnitt 8 angeordnet. Dabei ist das elastische Material 18 innerhalb der Platine 1 zwischen den Kontaktierungsabschnitten 7 angeordnet. Wird eine Anpresskraft auf den Kontaktierungsabschnitt 7 ausgeübt, so werden sowohl der Kontaktierungsabschnitt 7 als auch das elastische Material 18 deformiert. Dies trägt zur Stabilität der Platine 1 bei.

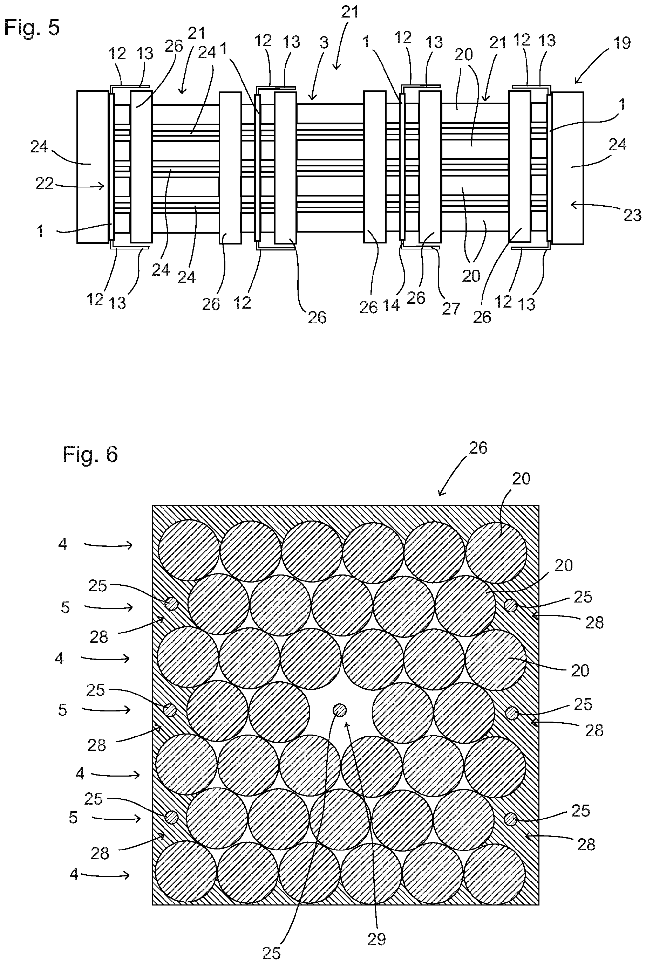

Fig. 5 zeigt eine schematische Darstellung einer Zellanordnung 3 einer Batterie 19 mit einer erfindungsgemäßen Platine 1. In der Zellanordnung 3 sind mehrere Batteriezellen 20 jeweils in einem Batterieabschnitt 21 nebeneinander angeordnet. Die in einem Batterieabschnitt 21 angeordneten Batteriezellen 20 sind miteinander parallel verschaltet. Die parallele Verschaltung der Batteriezellen 20 wird durch mehrere erfindungsgemäße Platinen 1 innerhalb der Zellanordnung 3 ermöglicht. Dafür sind Endanschlüsse der Batteriezellen 20 elektrisch und thermisch leitfähig mit den Platinen 1 verbunden. Die Platinen 1 sind jeweils zwischen zwei Batterieabschnitten 21 angeordnet. Batteriezellen 20 benachbarter Batterieabschnitte 21 werden durch die zwischen ihnen angeordneten Platinen 1 in Reihe geschaltet. Die Batteriezellen 20 in der Zellanordnung 3 sind somit sowohl parallel als seriell miteinander verschaltet.

Ein Batterieanfangsabschnitt 22 und ein Batterieendabschnitt 23 werden durch positive Endanschlüsse beziehungsweise durch negative Endanschlüsse von Batteriezellen 20 in der Batterie 19 gebildet. Der Batterieanfangsabschnitt 22 und der Batterieendabschnitt 23 sind mit äußeren Platinen 1 verbunden. Die äußeren Platinen 1 verbinden die Endanschlüsse der Batteriezellen 20 elektrisch und thermisch leitfähig. Auf einer dem Batterieanfangsabschnitt 22 beziehungsweise dem Batterieendabschnitt 23 abgewandten Seite der äußeren Platinen 1 ist jeweils eine Druckplatte 24 angeordnet. Die Druckplatte 24 ist aus Kupfer ausgeführt. Somit ist sie besonders gut wärmeleitfähig. Die Druckplatte 24 ist von den äußeren Platinen 1 elektrisch isoliert, sodass sie beim Betrieb der Batterie 19 keinen elektrischen Strom führt.

Die Druckplatten 24 sind durch Zugelemente 25 miteinander verbunden. Die Zugelemente 25 sind dabei solchermaßen mit den Druckplatten 24 verschraubt, dass sie eine Zugkraft auf die Druckplatten 24 ausüben. Dadurch wird die Zellanordnung 3 zusammengedrückt. Insbesondere werden die Batteriezellen 20 an die Platinen 1 gedrückt. Hierdurch wird zwischen den Endanschlüssen der Batteriezellen 20 und den Platinen 1 eine Kontaktfläche vergrößert, sodass ein elektrischer und ein thermischer Strom besser zwischen den Batteriezellen 20 und den Platinen 1 verteilt und damit auch besser über die gesamte Zellanordnung 3 verteilt werden können. Hierdurch werden lokale thermische Hotspots innerhalb der Batterie 19 vermieden. Ferner ist aufgrund der durch die Zugelemente 25 und die Druckplatten 24 verpressten Zellanordnung 3 die Batterie 19 besonders widerstandsfähig gegenüber mechanischen Belastungen.

Um zu gewährleisten, dass die Batteriezellen 20 sicher innerhalb der Zellanordnung 3 gehalten werden, sind die Batteriezellen 20 durch mehrere Positionierungsplatten 26 umschlossen. Die Positionierungsplatten 26 umschließen die Batteriezellen 20 in den Batterieabschnitten 21 formschlüssig. Da an den Platinen 1 eine exakte Kontaktierung der Endanschlüsse der Batteriezellen 20 mit den Platinen 1 notwendig ist, sind die Positionierungsplatten 26 vorliegend in der Nähe der Platinen 1 angeordnet.

Die Platinen 1 weisen vorliegend jeweils einen Belag 12 auf, der aus den Platinen 1 seitlich herausgeführt ist. Außerhalb der Platinen 1 bildet der Belag 12 jeweils ein Wärmeabfuhrelement 13. Über das Wärmeabfuhrelement 13 kann Wärme aus der Zellanordnung 3 abgeführt werden. Das Wärmeabfuhrelement 13 weist einen ersten flächigen Abschnitt 14 auf, der in einer Ebene der Platine 1 liegt, sowie einen zweiten flächigen Abschnitt 27, der in einer weiteren Ebene liegt, die in einem rechten Winkel zu der Ebene der Platine 1 ausgerichtet ist. Der zweite flächige Abschnitt 27 ist dazu geeignet, mit einem Gehäuse (nicht gezeigt) oder mit einer Wärmesenke (nicht gezeigt) wärmeleitfähig verbunden zu werden, sodass ein Wärmestrom aus der Platine 1 auf das Gehäuse beziehungsweise auf die Wärmesenke abgeführt werden kann.

Fig. 6 zeigt eine schematische Darstellung eines Abschnitts der Zellanordnung der Batterie 19 gemäß Fig. 5 in einer Schnittansicht. Dabei sind die Batteriezellen 20 in ersten Zellebenen 4 und zweiten Zellebenen 5 angeordnet. Die Batteriezellen 20 grenzen hierbei unmittelbar aneinander an. Die zweiten Zellebenen 5 weisen jeweils eine Batteriezelle 20 weniger auf als die ersten Zellebenen 4. Hierdurch ergeben sich äußere Durchtrittsabschnitte 28. Durch die äußeren Durchtrittsabschnitte 28 lassen sich Zugelemente 25 hindurchführen. Die äußeren Durchtrittsabschnitte 28 ermöglichen es, möglichst viele Batteriezellen 20 auf einer möglichst geringen Querschnittsfläche einer Zellanordnung 3 anzuordnen. So muss für die Durchführung eines Zugelements 25 in einem Randbereich eines Batterieabschnitts 21 nicht eine gesamte Batteriezelle 20 entfernt werden. Stattdessen wird lediglich aus einer zweiten Zellebene 5 eine Batteriezelle 20 entfernt. Durch die Entfernung der einen Batteriezelle 20 aus der zweiten Zellebene 5 entstehen zwei äußere Durchtrittsabschnitte 28. Durch jeden äußeren Durchtrittsabschnitt 28 können ein oder mehrere Zugelemente 25 hindurchgeführt werden. Vorliegend ist durch jeden äußeren Durchtrittsabschnitt 28 ein Zugelement 25 hindurchgeführt. Um eine gleichmäßige Stabilisierung der Zellanordnung 3 zu erreichen, ist vorliegend jedoch auch ein innerer Durchtrittsabschnitt 29 vorgesehen, in dem keine Batteriezelle 20 angeordnet ist. Durch den inneren Durchtrittsabschnitt 29 ist ein Zugelement 25 hindurchgeführt.

Die Batteriezellen 20 sind in dem Batterieabschnitt 21 durch die Positionierungsplatte 26 umschlossen. In der Positionierungsplatte 26 sind Zugelementaussparungen 6 vorgesehen, durch die die Zugelemente 25 in den äußeren Durchtrittsabschnitten 28 und in den inneren Durchtrittsabschnitt 29 hindurchgeführt sind.

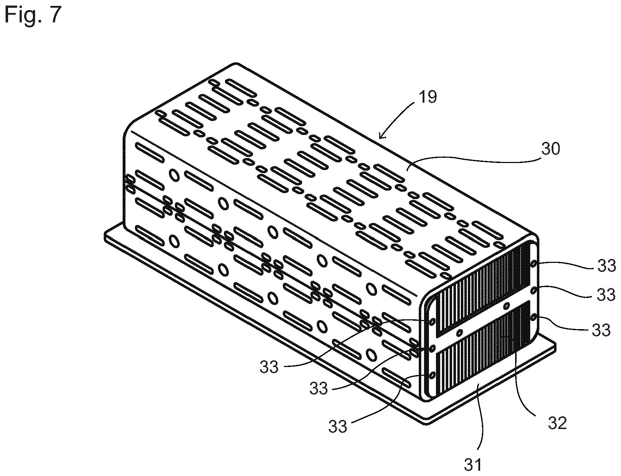

Fig. 7 zeigt eine schematische Darstellung einer Batterie 19 mit einem Gehäuse 30. Das Gehäuse 30 ist aus Eisen ausgeführt und umschließt eine Zellanordnung 3 mit erfindungsgemäßen Platinen 1. Dabei können innerhalb des Gehäuses 30 Wärmeabfuhrelemente 13 mit dem Gehäuse 30 verbunden sein, sodass ein thermischer Strom aus der Zellanordnung 3 auf das Gehäuse 30 abgeführt werden kann. Das Gehäuse 30 ist fest mit einer Halteplatte 31 verbunden, die als eine Wärmesenke dient. Das Gehäuse 30 wird an zwei Stirnseiten durch Druckplatten 24 verschlossen. Die Druckplatten 24 weisen Kühlrippen 32 auf, sodass die Druckplatten 24 dazu beitragen, die Zellanordnung 3 innerhalb des Gehäuses 30 zu kühlen. Nicht gezeigte Zugelemente 25 sind durch die Druckplatten 24 hindurchgeführt und mittels Muttern 33 an den Druckplatten 24 festgelegt.

### BEZUGSZEICHENLISTE

- 1.: Platine
- 2.: Erste Seite der Platine
- 3.: Zellanordnung
- 4.: Erste Zellebene
- 5.: Zweite Zellebene
- 6.: Zugelementaussparung
- 7.: Kontaktierungsabschnitt
- 8.: Isolierungsabschnitt
- 9.: Verbindungsabschnitt
- 10.: Leiterbahn
- 11.: Durchführungsaussparung
- 12.: Belag
- 13.: Wärmeabfuhrelement
- 14.: Erster flächiger Abschnitt des Wärmeabfuhrelements
- 15.: Zweite Seite der Platine
- 16.: Substratmaterial
- 17.: Durchführungselement
- 18.: Elastisches Material
- 19.: Batterie
- 20.: Batteriezelle
- 21.: Batterieabschnitt
- 22.: Batterieanfangsabschnitt
- 23.: Batterieendabschnitt
- 24.: Druckplatte
- 25.: Zugelement
- 26.: Positionierungsplatte
- 27.: Zweiter flächiger Abschnitt des Wärmeabfuhrelements
- 28.: Äußerer Durchtrittsabschnitt
- 29.: Innerer Durchtrittsabschnitt
- 30.: Gehäuse
- 31.: Halteplatte
- 32.: Kühlrippen
- 33.: Mutter

## Patentansprüche

1. Platine (1) zur Verbindung von Batteriezellen (20),
die teilweise aus einem nicht elektrisch leitfähigen Material ausgebildet ist,
wobei die Platine (1) auf einer ersten Seite (2) und auf einer zweiten Seite (15) jeweils elektrisch und thermisch leitfähige Kontaktierungsabschnitte (7) aufweist, und
wobei jeder Kontaktierungsabschnitt (7) mit jedem anderen Kontaktierungsabschnitt (7) elektrisch und thermisch leitfähig verbunden ist,
wobei auf dem nicht elektrisch leitfähigen Material der Platine (1) ein die zweite Seite (15) bildender flächiger Belag (12) aus einem elektrisch und thermisch leitfähigen Material angeordnet ist,
wobei mindestens ein Abschnitt des Belags (12) einen Kontaktierungsabschnitt (7) der zweiten Seite (15) bildet und
wobei auf einer von dem Belag (12) abgewandten ersten Seite (2) des nicht elektrisch leitfähigen Materials mindestens ein Kontaktierungsabschnitt (7) angeordnet ist, und
wobei mehrere elektrisch und thermisch leitfähige Durchführungselemente (17) sich durch das nicht elektrisch leitfähige Material erstrecken, sodass eine elektrische und eine thermische Verbindung der Kontaktierungsabschnitte (7) auf der ersten Seite (2) mit den Kontaktierungsabschnitten (7) auf der zweiten Seite (15) durch das Durchführungselement (17) hergestellt wird und ein Wärmestrom durch den Belag (12) aufgenommen und aus der Platine (1) abgeführt werden kann,
wobei auf der ersten Seite (2) der Platine (1) ein elektrisch und thermisch leitfähiger Verbindungsabschnitt (9) angeordnet ist, der die Kontaktierungsabschnitte (7) auf der ersten Seite (2) der Platine (1) elektrisch und thermisch leitfähig miteinander verbindet,
**dadurch gekennzeichnet, dass**
den Kontaktierungsabschnitten (7) auf der ersten Seite (2) jeweils eine elektrische Sicherung zugeordnet ist und
der Verbindungsabschnitt (9) auf der ersten Seite (2) der Platine (1) mit jedem Kontaktierungsabschnitt (7) auf der ersten Seite (2) der Platine (1) über die diesem Kontaktierungsabschnitt (7) zugeordnete elektrische Sicherung verbunden ist, sodass die Kontaktierungsabschnitte (7) auf der ersten Seite (2) der Platine (1) gegenüber dem Verbindungsabschnitt (9) elektrisch gesichert sind.

2. Platine (1) nach Anspruch 1,
**dadurch gekennzeichnet, dass**
der Belag vollflächig ausgebildet ist.

3. Platine (1) nach einem der vorhergehenden Ansprüche,
**dadurch gekennzeichnet, dass**
der Belag (12) aus einer Kante der Platine (1) herausgeführt ist oder an dieser freiliegt.

4. Platine (1) nach einem der vorhergehenden Ansprüche,
**dadurch gekennzeichnet, dass**
der Belag (12) mit einem thermisch leitfähigen Wärmeabfuhrelement (13) thermisch leitfähig verbunden ist
wobei das Wärmeabfuhrelement (13) einen ersten flächigen Abschnitt (14) aufweist, der in einer Ebene der Platine (1) liegt, und
wobei das thermisch leitfähige Wärmeabfuhrelement (13) einen zweiten flächigen Abschnitt (27) aufweist, der in einer weiteren Ebene liegt, die in einem rechten Winkel zu der Ebene der Platine (1) ausgerichtet ist.

5. Platine (1) nach einem der vorhergehenden Ansprüche,
**dadurch gekennzeichnet, dass**
der Belag (12) aus einem Metall ausgeführt ist.

6. Platine (1) nach Anspruch 5,
**dadurch gekennzeichnet, dass**
der Belag (12) aus Aluminium ausgeführt ist.

7. Platine (1) nach einem der vorhergehenden Ansprüche,
**dadurch gekennzeichnet, dass**
die Durchführungselemente (17) so angeordnet sind, dass sie den Verbindungsabschnitt (9) auf der ersten Seite (2) der Platine (1) mit den Kontaktierungsabschnitten (7) auf der zweiten Seite (15) der Platine (1) elektrisch und thermisch leitfähig verbinden, sodass jeder Kontaktierungsabschnitt (7) auf der ersten Seite (2) gegenüber jedem anderen Kontaktierungsabschnitt (7) auf der ersten Seite (2) der Platine (1) und gegenüber jedem Kontaktierungsabschnitt (7) auf der zweiten Seite (15) der Platine (1) durch die mindestens eine elektrische Sicherung gesichert ist.

8. Platine (1) nach einem der vorhergehenden Ansprüche,
**dadurch gekennzeichnet, dass**
der Verbindungsabschnitt (9) als eine flächige, elektrisch und thermisch leitfähige Schicht auf der ersten Seite (2) der Platine (1) ausgebildet ist.

9. Platine (1) nach einem der Ansprüche 1 bis 7,
**dadurch gekennzeichnet, dass**
der Verbindungsabschnitt (9) als ein Verbund von Leiterbahnen ausgebildet ist, die miteinander elektrisch und thermisch leitfähig verbunden sind.

10. Platine (1) nach Anspruch 9,
**dadurch gekennzeichnet, dass**
der Verbindungsabschnitt (9) auf der ersten Seite (2) der Platine (1) mit dem Belag (12) auf der zweiten Seite (15) der Platine (1) durch das elektrisch nicht leitfähige Material hindurch verbunden ist.

11. Platine (1) nach einem der vorhergehenden Ansprüche,
**dadurch gekennzeichnet, dass**
um jeden Kontaktierungsabschnitt (7) in dem Verbindungsabschnitt (9) auf der ersten Seite (2) der Platine (1) mehrere Durchführungselemente (17) gleichmäßig von dem Kontaktierungsabschnitt (7) beabstandet angeordnet sind.

12. Platine (1) nach einem der vorhergehenden Ansprüche,
**dadurch gekennzeichnet, dass**
die Durchführungselemente (17) auf einem Innenrand einer Durchführungsaussparung (11) angeordnet ist, die das nicht elektrisch leitfähige Material durchläuft.

13. Platine (1) nach einem der vorhergehenden Ansprüche,
**dadurch gekennzeichnet, dass**
die Kontaktierungsabschnitte (7) auf der ersten Seite (2) und/oder auf der zweiten Seite (15) der Platine (1) gegenüber einer Ebene, die durch eine Oberfläche der ersten Seite (2) beziehungsweise der zweiten Seite (15) der Platine (1) definiert wird, erhaben ausgebildet sind.

14. Platine (1) nach einem der vorhergehenden Ansprüche,
**dadurch gekennzeichnet, dass**
die Kontaktierungsabschnitte (7) erhabene Kontaktierungspunkte aufweisen.

15. Platine (1) nach einem der vorhergehenden Ansprüche,
**dadurch gekennzeichnet, dass**
die Platine (1) flexibel ausgebildet ist.

16. Platine (1) nach einem der vorhergehenden Ansprüche,
**dadurch gekennzeichnet, dass**
unter jedem Kontaktierungsabschnitt (7) ein elastisches Material (18) angeordnet ist, das unter Einwirkung einer Anpresskraft auf den Kontaktierungsabschnitt (7) elastisch verformbar ist.

## Claims

1. Board (1) for connecting battery cells (20), which is formed in part from an electrically non-conductive material,
wherein the board (1) has on a first side (2) and on a second side (15) in each case electrically and thermally conductive contacting sections (7), and
wherein each contacting section (7) is electrically and thermally conductively connected to each other contacting section (7),
wherein a planar covering (12) of an electrically and thermally conductive material forming the second side (15) is arranged on the electrically non-conductive material of the board (1),
wherein at least a portion of the covering (12) forms a contacting section (7) of the second side (15), and
wherein at least one contacting section (7) is arranged on a first side (2) of the electrically non-conductive material facing away from the covering (12), and
wherein a plurality of electrically and thermally conductive lead-through elements (17) extend through the electrically non-conductive material, so that an electrical and a thermal connection of the contacting sections (7) on the first side (2) to the contacting sections (7) on the second side (15) is made by the lead-through element (17) and a heat flow can be absorbed by the covering (12) and dissipated from the board (1),
wherein on the first side (2) of the board (1), an electrically and thermally conductive connecting section (9) is arranged, which electrically and thermally conductively connects the contacting sections (7) on the first side (2) of the board (1) to one another,
**characterized in that**
an electrical fuse is assigned to each of the contacting sections (7) on the first side (2) of the board (1) and
the connecting section (9) on the first side (2) of the board (1) is connected to each contacting section (7) on the first side (2) of the board (1) via the electrical fuse assigned to this contacting section (7), such that the contacting sections (7) on the first side of the board (1) are electrically secured against the connecting section (9).

2. Board (1) according to claim 1,
**characterized in that**
the covering is formed over an entire surface.

3. Board (1) according to one of the preceding claims,
**characterized in that**
the covering (12) is led out of an edge of the board (1) or is exposed on the edge.

4. Board (1) according to one of the preceding claims,
**characterized in that**
the covering (12) is thermally conductively connected to a thermally conductive heat dissipation element (13),
wherein the heat dissipation element (13) has a first planar section (14) extending in a plane of the board (1), and
wherein the heat dissipation element (13) has a second planar section (27) extending in another plane oriented at a right angle to the plane of the board (1).

5. Board (1) according to one of the preceding claims,
**characterized in that**
the covering (12) is made of a metal.

6. Board (1) according to claim 5,
**characterized in that**
the covering (12) is made of aluminum.

7. Board (1) according to one of the preceding claims,
**characterized in that**
the lead-through elements (17) are arranged such that they electrically and thermally conductively connect the connecting section (9) on the first side (2) of the board (1) to the contacting sections (7) on the second side (15) of the board (1), such that each contacting section (7) on the first side (2) is secured against each other contacting section (7) on the first side (2) of the board (1) and against each contacting section (7) on the second side (15) of the board (1) by at least one electrical fuse.

8. Board (1) according to one of the preceding claims,
**characterized in that**
the connecting section (9) is formed as a planar, electrically and thermally conductive layer on the first side (2) of the board (1).

9. Board (1) according to one of claims 1 to 7,
**characterized in that**
the connecting section (9) is formed as a composite of conductor tracks which are electrically and thermally conductively connected to one another.

10. Board (1) according to claim 9,
**characterized in that**
the connecting section (9) on the first side (2) of the board (1) is connected to the covering (12) on the second side (15) of the board (1) through the electrically non-conductive material.

11. Board (1) according to one of the preceding claims,
**characterized in that**
around each contacting section (7) in the connecting section (9) on the first side (2) of the board (1), a plurality of lead-through elements (17) are arranged uniformly spaced apart from the contacting section (7).

12. Board (1) according to one of the preceding claims,
**characterized in that**
the lead-through elements (17) are arranged on an inner edge of a lead-through recess (11) which passes through the electrically non-conductive material.

13. Board (1) according to one of the preceding claims,
**characterized in that**
the contacting sections (7) on the first side (2) and/or on the second side (15) of the board (1) are elevated with respect to a plane defined by a surface of the first side (2) or the second side (15) of the board (1), respectively.

14. Board (1) according to one of the preceding claims,
**characterized in that**
the contacting sections (7) have elevated contacting points.

15. Board (1) according to one of the preceding claims,
**characterized in that**
the board (1) is flexible.

16. Board (1) according to one of the preceding claims,
**characterized in that**
below each contacting section (7), an elastic material (18) is arranged which is elastically deformable under the action of a contact pressure on the contacting section (7).

## Revendications

1. Carte de circuit (1) pour le raccordement des éléments de batterie (20), qui est en partie formé d'un matériau non électriquement conducteur,
dans lequel la carte de circuit (1) comporte sur un premier côté (2) et sur un deuxième côté (15) à chaque fois des sections de contact (7) électriquement et thermiquement conductrices, et
dans lequel chaque section de contact (7) est connectée de manière électriquement et thermiquement conductrice à chaque autre section de contact (7),
dans lequel un revêtement plat (12) en un matériau électriquement et thermiquement conducteur qui forme le deuxième côté (15) est disposé sur le matériau non électriquement conducteur de la carte de circuit (1),
dans lequel au moins une partie du revêtement (12) forme une section de contact (7) du deuxième côté (15) et
dans lequel au moins une section de contact (7) est disposée sur un premier côté (2) du matériau non électriquement conducteur qui est opposé au revêtement (12), et
dans lequel une pluralité d'éléments de traversée (17) électriquement et thermiquement conducteurs s'étendent à travers le matériau non électriquement conducteur de sorte qu'une connexion électrique et une connexion thermique des sections de contact (7) sur le premier côté (2) avec les sections de contact (7) sur le deuxième côté (15) est établiee par l'élément de traversée (17) et un flux de chaleur peut être absorbé par le revêtement (12) et dissipé de la carte de circuit (1),
dans lequel une section de connexion (9) électriquement et thermiquement conductrice est disposée sur la première côté (2) de la carte de circuit (1), qui connecte les sections de contact (7) du premier côté (2) de la carte de circuit (1) entre elles de manière électriquement et thermiquement conductrice, **caractérisé en ce que**
un fusible électrique est associé à chacune des sections de contact (7) sur le premier côté (2) et
la section de connexion (9) sur le premier côté (2) de la carte de circuit (1) est connectée à chaque section de contact (7) sur le premier côté (2) de la carte de circuit (1) via le fusible électrique associé à cette section de contact (7), de sorte que les sections de contact (7) sur le premier côté (2) de la carte de circuit (1) sont électriquement sécurisées contre la section de connexion (9).

2. Carte de circuit (1) selon la revendication 1,
**caractérisé en ce que**
le revêtement est formé sur une entière surface.

3. Carte de circuit (1) selon l'une quelconque des revendications précédentes,
**caractérisé en ce que**
le revêtement (12) est sorti d'un bord de la carte de circuit (1) ou est exposé à ce bord.

4. Carte de circuit (1) selon l'une quelconque des revendications précédentes,
**caractérisé en ce que**
le revêtement (12) est connecté de manière thermiquement conductrice à un élément de dissipation de chaleur (13),
dans lequel l'élément de dissipation de chaleur (13) comporte une première partie plate (14) située dans un plan de la carte de circuit (1), et
dans lequel l'élément de dissipation de chaleur (13) comporte une deuxième partie plate (27) située dans un autre plan orienté à angle droit par rapport au plan de la carte de circuit (1).

5. Carte de circuit (1) selon l'une quelconque des revendications précédentes,
**caractérisé en ce que**
le revêtement (12) est constitué d'un métal.

6. Carte de circuit (1) selon la revendication 5,
**caractérisé en ce que**
le revêtement (12) est constitué d'aluminium.

7. Carte de circuit (1) selon l'une quelconque des revendications précédentes,
**caractérisé en ce que**
les éléments de traversée (17) sont disposés pour connecter de manière électriquement et thermiquement conductrice la section de connexion (9) sur le premier côté (2) de la carte de circuit (1) aux sections de contact (7) sur le deuxième côté (15) de la carte de circuit (1), de sorte que chaque section de contact (7) sur le premier côté (2) est sécurisé contre chaque autre section de contact (7) sur le premier côté (2) de la carte de circuit (1) et contre chaque section de contact (7) sur le deuxième côté (15) de la carte de circuit (1) par au moins un fusible électrique.

8. Carte de circuit (1) selon l'une quelconque des revendications précédentes,
**caractérisé en ce que**
la section de connexion (9) est formée comme une couche plate, électriquement et thermiquement conductrice, sur le premier côté (2) de la carte de circuit (1).

9. Carte de circuit (1) selon l'une quelconque des revendications 1 à 7,
**caractérisé en ce que**
la section de connexion (9) est formée comme un composite des pistes conductrices qui sont connectées entre elles de manière électriquement et thermiquement conductrice.

10. Carte de circuit (1) selon la revendication 9,
**caractérisé en ce que**
la section de connexion (9) sur le premier côté (2) de la carte de circuit (1) est connectée au revêtement (12) sur le deuxième côté (15) de la carte de circuit (1) à travers le matériau non électriquement conducteur.

11. Carte de circuit (1) selon l'une quelconque des revendications précédentes,
**caractérisé en ce que**
autour de chaque section de contact (7) dans la section de connexion (9) sur le premier côté (2) de la carte de circuit (1), une pluralité d'éléments de traversée (17) sont disposés à distance égale de la section de contact (7).

12. Carte de circuit (1) selon l'une quelconque des revendications précédentes,
**caractérisé en ce que**
les éléments de traversée (17) sont disposés sur un bord intérieur d'un renfoncement de traversée (11), qui traverse le matériau non électriquement conducteur.

13. Carte de circuit (1) selon l'une quelconque des revendications précédentes,
**caractérisé en ce que**
les sections en contact (7) sur le premier côté (2) et/ou sur le deuxième côté (15) de la carte de circuit (1) sont formées élevés par rapport à un plan défini par une surface du premier côté (2) ou du deuxième côté (15) de la carte de circuit (1), respectivement.

14. Carte de circuit (1) selon l'une quelconque des revendications précédentes,
**caractérisé en ce que**
les sections de contact (7) comportent des points de contact élevés.

15. Carte de circuit (1) selon l'une quelconque des revendications précédentes,
**caractérisé en ce que**
la carte de circuit (1) est flexible.

16. Carte de circuit (1) selon l'une quelconque des revendications précédentes,
**caractérisé en ce que**
sous chaque section de contact (7) est disposé un matériau élastique (18) qui est déformable élastiquement sous l'action d'une pression de contact sur la section de contact (7).
